# FASCICULE DE BREVET EUROPEEN

(11) **EP 2 137 836 B1**
(45) Date de publication et mention de la délivrance du brevet: **01.08.2012**
(21) Numéro de dépôt: 08787916.9
(22) Date de dépôt: 04.04.2008
(51) Int. Cl.: H04B 7/185

(54) **PROCEDE ET DISPOSITIF DE GESTION DE CANAUX DE COMMUNICATION POUR DES ECHANGES DE DONNEES A PARTIR D'UN AERONEF**
VERFAHREN UND VORRICHTUNG ZUR VERWALTUNG VON KOMMUNIKATIONSKANÄLEN FÜR DATENAUSTAUSCH IN EINEM FLUGZEUG
METHOD AND DEVICE FOR MANAGING COMMUNICATION CHANNELS FOR DATA EXCHANGE FROM AN AIRCRAFT

(30) Priorité: 06.04.2007 FR 0754394
(43) Date de publication de la demande: 30.12.2009
(73) Titulaire: Airbus Operations, 31060 Toulouse (FR); Airbus, 31700 Blagnac (FR)
(72) Inventeur: SOUMIER, Vincent, F-31000 Toulouse (FR); RABAUTE, Eric, F-31170 Tournefeuille (FR); REGOUBY, Christophe, F-31400 Toulouse (FR); MOTHES, Yvan, F-31620 Castelany Destretefonds (FR); GILIS, Fabien, F-31100 Toulouse (FR); CUQ, Pierre, F-31450 Ayguesvives (FR)
(74) Mandataire: Imbert de Tremiolles, Ghislain
(86) Numéro de dépôt international: PCT/FR2008/000477
(87) Numéro de publication internationale: WO 2008/139062

(56) Documents cités:
- WO-A-02/30007
- WO-A-03/021815
- FR-A1- 2 787 658
- US-A1- 2002 009 993

## Description

La présente invention concerne le domaine des communications avioniques et plus particulièrement un procédé et un dispositif de gestion de canaux de communication pour des échanges de données à partir d'un aéronef, adaptés notamment à permettre les échanges asynchrones de messages numériques entre le système d'information d'un avion et celui de la compagnie aérienne au sol à l'aide de plusieurs moyens de communications.

Les besoins d'échange d'information entre un avion et le sol augmentent avec le développement des avions. Ces besoins sont en particulier liés aux mises à jour des différents composants du système d'information de l'avion, à la transmission d'informations de vol depuis les stations au sol, à la transmission d'informations de maintenance de l'avion pour optimiser les coûts et aux services offerts aux passagers.

Il convient de distinguer les échanges d'information entre l'avion et le sol et les échanges d'information entre plusieurs systèmes de l'avion, liés à l'avion ou aux passagers. Les systèmes présents dans l'avion peuvent communiquer entre eux selon des moyens de communication standard tels que par réseaux filaires ou par réseaux sans fils, notamment les réseaux WiFi *(Wireless Fidelity)* de type 802.11 a/b/g.

Les liaisons entre un avion et le sol sont généralement spécifiques aux avions. Par exemple, le système de communication ATN *(Aeronautical Telecommunication Network)* ACARS *(ARINC Communication Addressing and Reporting System)* permet d'échanger des données codées entre l'avion et le sol à travers des liens VDL *(VHF Digital Link),* Mode S ou satellites.

Les coûts des liaisons spécifiques entre un avion et le sol sont généralement supérieurs aux systèmes de communication dits du « monde ouvert » tels que WiFi, WiMax *(Worldwide Interoperability for Microwave Access),* GSM *(Global System for Mobile Communications*), GPRS *(General Packet Radio Service),* UMTS *(Universal Mobile Telecommunications System),* MPDS *(mobile Packet Data Service)* ou SBB (*Swift Broad Band*). De plus, ces systèmes de communication du mohde ouvert offrent souvent des performances supérieures à celles rencontrées dans le monde avionique et connaissent une évolution technologique rapide. Cependant, ceux-ci peuvent arriver à maturité et/ou devenir obsolète en moins d'une décennie ce qui peut présenter un handicap important dans le domaine aéronautique où le temps de développement et de normalisation est long.

A titre d'illustration, la demande de brevet US 2002/0009993 décrit un système de transmission de données entre un aéronef et une station au sol mettant en oeuvre plusieurs moyens de communication. Ce système est basé sur des règles d'établissement de communication déterminées par zones géographiques et par préférences. Ainsi, trois étapes essentielles sont mises en oeuvre. Une première étape a pour objet de déterminer la zone géographique dans laquelle se trouve l'aéronef. Une seconde étape vise à sélectionner des fréquences devant être utilisées dans la zone déterminée. Ces fréquences sont sélectionnées selon des tables associées aux zones géographiques. Enfin, un canal préféré est sélectionné dans une troisième étape selon une liste de préférences ordonnées associée à la zone déterminée et la disponibilité des canaux préférés. Les données sont transmises sous forme de messages dans lesquels sont indiqués les canaux pouvant être utilisés.

Un inconvénient majeur des solutions utilisées pour les communications entre avion et sol est qu'elles ne permettent pas de répondre au double besoin de fournir un système unique de communication bord sol à l'ensemble des applications embarquées à bord de l'avion prenant notamment en compte la gestion des priorités et des coûts et de permettre l'ajout de nouvelles technologies telle que HSDPA *(High Speed Downlink Packet Access)* sans impact sur le système de communication existant, pour accélérer le temps d'intégration de ces technologies.

L'invention permet de résoudre au moins un des problèmes exposés précédemment.

L'invention a ainsi pour objet un procédé de communication de données dans un aéronef comprenant des moyens adaptés à établir au moins un chemin de connexion entre ledit aéronef et au moins une entité au sol selon une pluralité de canaux de communication d'au moins deux types différents, ce procédé étant caractérisé en ce qu'il comprend les étapes suivantes,
- détection d'un événement ;
- détermination d'une configuration de communication selon ledit événement pour permettre audit aéronef de recevoir ou de transmettre des données à ladite au moins une entité au sol par l'intermédiaire d'au moins un desdits canaux de communication ; et,
- adaptation desdits moyens adaptés à établir au moins un chemin de connexion pour établir au moins un chemin de connexion entre ledit aéronef et ladite au moins une entité au sol selon ladite configuration de communication.

Le procédé comprend en outre une étape de transmission d'au moins une donnée, ladite étape de transmission comprenant les étapes suivantes,
- détermination d'un niveau de priorité de ladite au moins une donnée :
- détermination du type de canal de communication dudit au moins un chemin de connexion ; et,
- si ledit type de canal de communication déterminé est compatible avec ledit niveau de priorité, transmettre ladite au moins une donnée à ladite au moins une entité au sol.

Le procédé selon l'invention permet ainsi de mettre en oeuvre de nouveaux médias ou de nouvelles applications sans modification substantielle du système de communication. Il permet également de s'adapter facilement aux évolutions futures des médias de communications, notamment aux évolutions des médias en terme de sécurité de communication.

Le procédé selon l'invention permet ainsi une gestion adaptée des messages à transmettre.

Avantageusement, pour simplifier la mise en oeuvre du procédé, une adresse de destination de ladite au moins une entité au sol est associée à chaque niveau de priorité, ladite au moins une donnée étant transmise à l'adresse de destination associée au niveau de priorité de ladite au moins une donnée.

Selon un mode de réalisation particulier, la détermination de ladite compatibilité dudit canal de communication déterminé avec ledit niveau de priorité est fonction est déterminée par d'au moins un paramètre de configuration, Ce mode de réalisation offre une configuration aisée des modes de transmissions des messages.

Toujours selon un mode de réalisation particulier, ledit événement est lié à l'état desdits canaux de communication ou à la position dudit aéronef.

Toujours selon un mode de réalisation particulier, le procédé comprend .en outre une étape d'accès à au moins une donnée à transmettre, le format de ladite au moins une donnée accédée étant indépendant du canal de communication dudit au moins un chemin de connexion. Les applications utilisant le procédé de communication sont ainsi indépendantes des médias utilisés.

L'invention a aussi pour objet un programme d'ordinateur comprenant des instructions adaptées à la mise en oeuvre de chacune des étapes du procédé décrit précédemment.

L'invention a également pour objet un dispositif de communication de données dans un aéronef comprenant des moyens adaptés à établir au moins un chemin de connexion entre ledit aéronef et au moins une entité au sol selon une pluralité de canaux de communication d'au moins deux types différents, ce dispositif étant caractérisé en ce qu'il comprend les moyens suivants,
- moyens pour détecter un événement ;
- moyens pour déterminer une configuration de communication selon ledit événement permettant audit aéronef de recevoir ou de transmettre des données à ladite au moins une entité au sol par l'intermédiaire d'au moins un desdits canaux de communication ; et,
- moyens pour adapter lesdits moyens adaptés à établir au moins un chemin de connexion afin d'établir au moins un chemin de connexion entre ledit aéronef et ladite au moins une entité au sol selon ladite configuration de communication.

Le dispositif selon l'invention permet ainsi de mettre en oeuvre de nouveaux médias ou de nouvelles applications sans modification substantielle du système de communication. Il permet également de s'adapter facilement aux évolutions futures des médias de communications, notamment aux évolutions des médias en terme de sécurité de communication.

Selon un mode de réalisation particulier, le dispositif comprend en outre des moyens de transmission d'au moins une donnée, lesdits moyens de transmission comprenant les moyens suivants,
- moyens pour déterminer un niveau de priorité de ladite au moins une donnée ;
- moyens pour déterminer le type de canal de communication dudit au moins un chemin de connexion ; et,
- moyens pour déterminer si ledit type de canal de communication déterminé est compatible avec ledit niveau de priorité et pour transmettre ladite au moins une donnée à ladite au moins une entité au sol.

Avantageusement le dispositif comprend en outre des moyens de mémorisation des données à transmettre, lesdites données à transmettre étant mémorisées selon les niveaux de priorité associés auxdites données à transmettre, une adresse de destination de ladite au moins une entité au sol étant associée à chaque niveau de priorité.

Toujours selon un mode de réalisation particulier, lesdits moyens de détection d'un événement sont adaptés à détecter une modification d'état desdits canaux de communication ou la position dudit aéronef pour déterminer le canal de communication préféré.

D'autres avantages, buts et caractéristiques de la présente invention ressortent de la description détaillée qui suit, faite à titre d'exemple non limitatif, au regard des dessins annexés dans lesquels :
- la figure 1 illustre un exemple d'environnement dans lequel l'invention est mise en oeuvre pour permettre l'échange de données entre un avion et le sol ;
- la figure 2 représente un exemple d'appareil adapté à mettre en oeuvre une partie de l'invention ;
- la figure 3 illustre le système de communication selon l'invention ;
- la figure 4 représente un exemple de gestion des canaux de communication par un contrôleur de communication lorsqu'un canal de communication devient disponible et lorsqu'un paramètre de vol est modifié ;
- la figure 5 illustre un premier exemple d'implémentation pour l'échange de messages entre le système d'information d'un avion et un système d'information au sol ;
- la figure 6 montre un mécanisme de gestion des priorités pour des messages transmis par des avions ;
- la figure 7 représente un exemple d'algorithme de traitement des messages reçus d'une application du système d'information d'un avion par un module OAMS et devant être transmis à un module GAMS d'un système d'information au sol ; et,
- la figure 8 illustre un second mode de réalisation pour l'échange de messages entre le système d'information d'un avion et un système d'information au sol.

L'invention a pour objet un procédé et un dispositif de communication adaptés à gérer de façon native l'échange asynchrone de données, de préférence sous forme de messages numériques, entre une entité mobile telle qu'un avion et le sol selon plusieurs canaux de communication suivant leurs disponibilités et la politique mise en oeuvre par la compagnie aérienne. Une telle politique peut notamment être établie en fonction de la zone géographique, de la phase de vol et de la priorité des messages à transmettre. Les messages sont par exemple transmis sous forme de paquets IP *(Internet Protocol*).

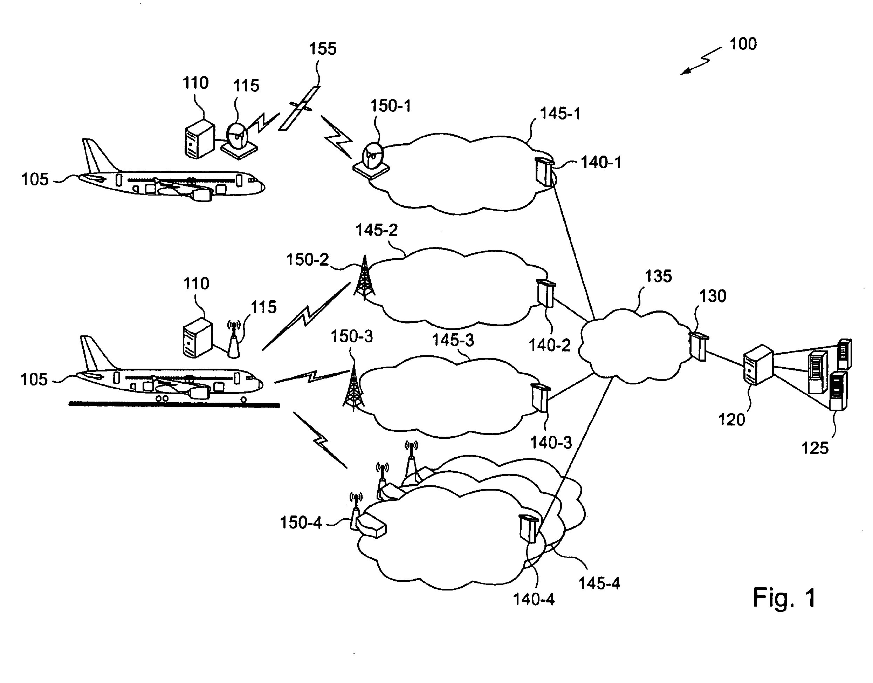

La figure 1 illustre un exemple d'environnement 100 dans lequel l'invention est mise en oeuvre pour permettre l'échange de données entre un avion 105 et le sol, lorsque l'avion est au sol ou à proximité du sol et lorsque l'avion est en l'air.

L'avion 105 comprend de préférence un serveur d'applications (non représenté), un serveur de communication 110 et une interface de communication sans fil 115 adaptée à transmettre et à recevoir des données selon plusieurs canaux de communication. Les canaux de communication illustrés ici sont liés à des communications satellites, des communications WiMax, des communications selon des technologies de téléphonie mobile telles que GSM, GPRS et UMTS et des communications WiFi.

Au sol, un serveur de communication 120 relié à des serveurs d'applications 125 est relié à un réseau 135 tel qu'Internet à travers, de préférence, un dispositif de protection 130 (*firewall*). Le réseau 135 est lui-même connecté à une pluralité de réseaux de communication sans fil tels que le réseau satellite 145-1, le réseau WiMax 145-2, le réseau 145-3 de type GSM, GPRS ou UMTS et le réseau WiFi 145-4, de préférence à travers les dispositifs de protection 140-1 à 140-4, respectivement. Chacun des réseaux de communication sans fil 145-1 à 145-4 comprend au moins une interface de communication sans fil référencée 150-1 à 150-4, respectivement, permettant de transmettre et de recevoir des données selon le protocole associé. Ainsi, le réseau satellite 145-1 est capable de recevoir des données du satellite 155 et de transmettre des données depuis le satellite 155, le satellite 155 étant lui-même adapté à transmettre ou à recevoir des données vers ou depuis l'interface de communication sans fil 115 de l'avion 105. De même, le réseau WiMax 145-2 est capable de recevoir ou de transmettre des données depuis ou vers l'interface de communication sans fil 115 de l'avion 105. Il en est de même des réseaux 145-3 et 145-4. Bien que la figure 1 ne représente qu'une seule interface générale de communication sans fil, l'interface de communication sans fil 115 est de préférence constituée de plusieurs interfaces de communication sans fil, une par canal de communication, c'est-à-dire ici une interface pour les communications via satellites, une interface de type WiMax, une interface de type de type GSM, GPRS ou UMTS et une interface de type WiFi.

Lorsque l'avion est au sol ou à proximité du sol, l'interface de communication sans fil 115 de l'avion est adaptée à communiquer avec les interfaces de communication sans fil 150-1 et avec les interfaces de communication sans fil 150-2 à 150-4 (il est ici supposé que l'environnement au sol de l'avion dispose de ces interfaces de communication sans fil). Lorsque l'avion est en l'air, à une distance des interfaces de communication sans fil 150-2 à 150-3 supérieure à la portée de communication de ces interfaces, seule l'interface de communication sans fil par satellite 150-1 peut être utilisée.

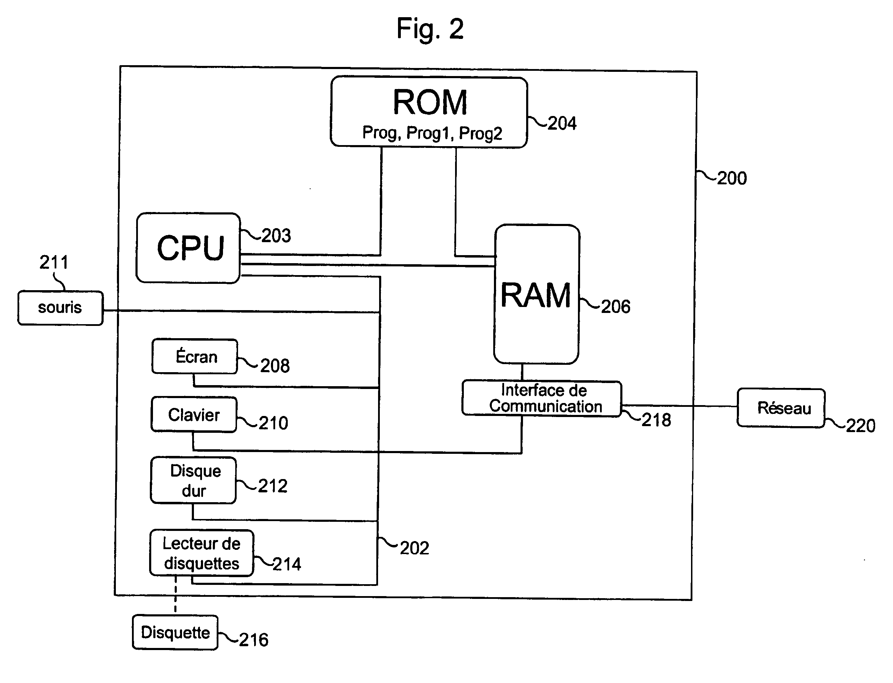

La figure 2 illustre un exemple d'appareil adapté à mettre en oeuvre une partie de l'invention. L'appareil 200 est par exemple un serveur de communication ou un serveur d'application.

L'appareil 200 comporte un bus de communication 202 auquel sont reliés :
- une unité centrale de traitement ou microprocesseur 203 (CPU, *Central Processing Unit) ;*
- une mémoire morte 204 (ROM, *Read Only Memory)* pouvant comporter les programmes "Prog", "Prog1" et "Prog2" ;
- une mémoire vive ou mémoire cache 206 (RAM, *Random Access Memory)* comportant des registres adaptés à enregistrer des variables et paramètres créés et modifiés au cours de l'exécution des programmes précités ; et,
- une interface de communication 218 reliée à un réseau de communication distribué 220, par exemple le réseau Internet, l'interface étant apte à transmettre et à recevoir des données.

Optionnellement, l'appareil 200 peut également disposer :
- d'un écran 208 permettant de visualiser des données et/ou de servir d'interface graphique avec l'utilisateur qui pourra interagir avec les programmes selon l'invention, à l'aide d'un clavier 210 ou de tout autre moyen tel qu'un dispositif de pointage, comme par exemple une souris 211 ou un crayon optique, un écran tactile ou une télécommande ;
- d'un disque dur 212 pouvant comporter les programmes "Prog", "Prog1" et "Prog2" précités et des données traitées ou à traiter selon l'invention ;
- d'un lecteur de disquette 214 adapté à recevoir une disquette 216 et à y lire ou à y écrire des données traitées ou à traiter selon l'invention ; et,
- d'un lecteur de cartes mémoires adapté à y lire ou à y écrire des données traitées ou à traiter selon l'invention.

Le bus de communication permet la communication et l'interopérabilité entre les différents éléments inclus dans l'appareil 200 ou reliés à lui. La représentation du bus n'est pas limitative et, notamment, l'unité centrale est susceptible de communiquer des instructions à tout élément du l'appareil 200 directement ou par l'intermédiaire d'un autre élément du l'appareil 200.

Le code exécutable de chaque programme permettant à l'appareil programmable de mettre en oeuvre les processus selon l'invention, peut être stocké, par exemple, dans le disque dur 212 ou en mémoire morte 204.

Selon une variante, la disquette 216 peut contenir des données ainsi que le code exécutable des programmes précités qui, une fois lu par l'appareil 200, sera stocké dans le disque dur 212.

En seconde variante, le code exécutable des programmes pourra être reçu par l'intermédiaire du réseau de communication 220, via l'interface 218, pour être stocké de façon identique à celle décrite précédemment.

Les disquettes peuvent être remplacées par tout support d'information tel que, par exemple, un disque compact (CD-ROM) ou une carte mémoire. De manière générale, les disquettes peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en oeuvre du procédé selon l'invention.

De manière plus générale, le ou les programmes pourront être chargés dans un des moyens de stockage de l'appareil 200 avant d'être exécutés.

L'unité centrale 203 va commander et diriger l'exécution des instructions ou portions de code logiciel du ou des programmes selon l'invention, instructions qui sont stockées dans le disque dur 212 ou dans la mémoire morte 204 ou bien dans les autres éléments de stockage précités. Lors de la mise sous tension, le ou les programmes qui sont stockés dans une mémoire non volatile, par exemple le disque dur 212 ou la mémoire morte 204, sont transférés dans la mémoire vive 206 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

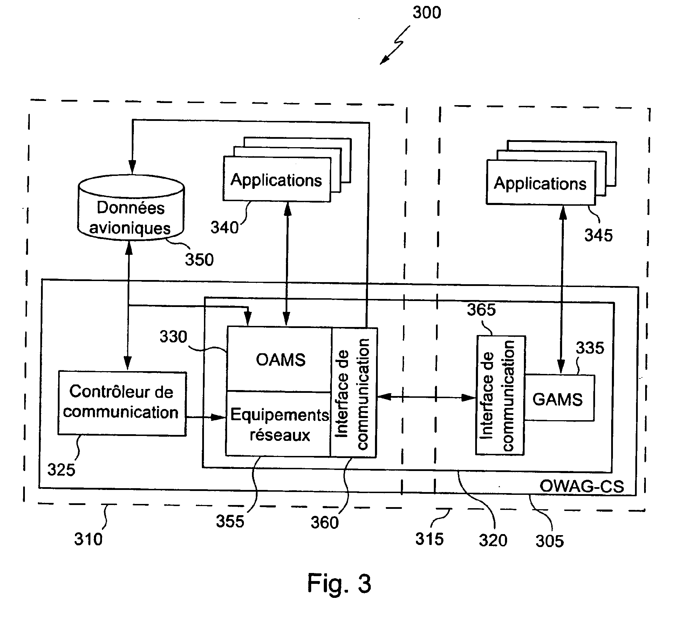

La figure 3 illustre le système de communication 300 selon l'invention, appelé OWAG-CS *(Open World Aircraft Ground-Communication System),* qui comprend un noyau 305 dont une composante est implémentée dans le système de communication 310 de l'avion et une autre composante est implémentée dans le système de communication 315 au sol. Le système de communication OWAG-CS 300 est de préférence constitué de deux parties distinctes. Une première partie 320 est liée à l'échange de données entre l'avion et le sol. Une seconde partie 325 appelée « Contrôleur de Communication » est liée à la gestion des canaux de communication. La première partie comprend elle-même deux modules, un premier module 330 appelé OAMS *(On-board Asynchronous Messaging Service)* implémenté dans l'avion et un second module 335 appelé GAMS *(Ground Asynchronous Messaging Service)* implémenté au sol. Chacun des modules OAMS 330 et GAMS 335 est utilisé comme interface pour les éléments applicatifs 340 et 345, respectivement.

Le contrôleur de communication 325 et le module OAMS 330 sont reliés à un dispositif 350 comprenant des données avioniques, par exemple une mémoire ou une base de données dont les informations sont issues de capteurs ou proviennent d'ordinateurs de vol. Ces données avioniques sont notamment utilisées pour déterminer quels canaux de communication peuvent être utilisés. Le contrôleur de communication contrôle en particulier les équipements réseaux 355 de l'avion. Les équipements réseaux permettent d'établir une connexion entre l'avion et le sol.

L'échange de données entre les modules OAMS et GAMS est réalisé à travers les interfaces de communication 360 et 365 adaptées à mettre en oeuvre plusieurs types de canaux de communication. La configuration des canaux de communication de l'interface de communication 360 est contrôlée par le contrôleur de communication 325.

Le flux d'information établi entre le contrôleur de communication 325 et les équipements réseaux 355 est un flux de configuration qui comprend les commandes transmises par le contrôleur de communication aux équipements réseaux pour mettre à jour leur configuration.

Le flux d'information établi entre l'interface de communication 360 et le dispositif 350, entre le dispositif 350 et le contrôleur de communication 325 et entre un fichier de configuration lié à la politique de la compagnie aérienne et le contrôleur de communication 325 est un flux de supervision qui comprend les informations de mise à jour des données avioniques par l'interface de communication 360 et par le contrôleur de communication 325.

Enfin, le flux de données établi entre l'interface de communication 360, les équipements réseaux 355 et le module OAMS 330 comprend les données échangées entre le module OAMS 330 et le module GAMS 335 suivant les différents chemins de connexion disponibles.

Cette répartition du système de communication 300 permet en particulier aux éléments applicatifs en charge de la transmission des données de ne pas être impacté par l'ajout, la suppression ou la modification de types de canaux de communication. Toutes les problématiques de configuration réseau sont ainsi dissociées de la couche applicative de délivrance de messages. Ceci est également vrai pour les infrastructures de la compagnie aérienne pour lesquels les routes entre l'avion et le sol seront transparentes. Il est ainsi possible de développer des fonctionnalités sans craindre de devoir modifier ces fonctionnalités à chaque ajout, suppression ou modification de type de canaux de communication. L'interface applicative entre les éléments applicatifs 340 avec le module OAMS 330 est avantageusement normalisée pour occulter les problématiques d'échange de données pour les développeurs d'applications embarquées et ainsi de décorréler les versions des applications implémentées dans l'avion du module OAMS 330.

Selon un premier mode de réalisation le contrôleur de communication 325 est un service applicatif installé sur un serveur à bord de l'avion comprenant des connecteurs dédiés interfacés avec une base de donnée avionique indiquant notamment la phase de vol de l'avion et avec des fichiers de configuration définissant la politique de la compagnie aérienne en matière de communication, par exemple à quel moment le satellite peut être utilisé. Ces deux types d'information permettent au contrôleur de communication 325 de calculer en temps réel la configuration des équipements réseaux nécessaire à l'établissement des liaisons de bout en bout entre le module OAMS 330 implémenté dans l'avion et le module GAMS 335 implémenté au sol. Le contrôleur de communication 325 ne travaille de préférence qu'au niveau des couches basses du modèle OSI et établit en temps réel les chemins de connexion suivant la disponibilité des canaux de communication, les phases de vol et la politique de la compagnie aérienne. Cette adaptabilité d'établissement des chemins de connexion permet d'optimiser les communications de l'avion en fonction notamment de la priorité des messages et du coût d'usage de chaque canal de communication.

Il convient de noter ici qu'un module GAMS 335 centralise les communications d'une flotte d'avions, c'est-à-dire les communications établies avec plusieurs modules OAMS 330, par exemple plusieurs centaines de modules OAMS 330 (un par avion) permettant ainsi à une compagnie aérienne de gérer les échanges de messages avec ses avions de manière centralisée et donc simplifiée.

Bien que les modules OAMS 330 et GAMS 335 présentent certaines similitudes, ils diffèrent sur plusieurs points. Tout d'abord, selon un mode de réalisation particulier, le stockage des données est réalisé au sein d'une base de données pour le module GAMS 335 tandis qu'il est réalisé directement dans le gestionnaire de fichier du serveur pour le module OAMS. De plus, l'avion étant toujours à l'initiative des communications, les *servlets* du module OAMS ont la charge d'envoyer ou de rapatrier les données depuis ou vers l'avion tandis que les *servlets* du module GAMS doivent recevoir ou mettre à disposition les messages depuis ou à destination de l'avion. L'échange de messages est bidirectionnel bien que ce soit le système de communication implémenté dans l'avion qui est toujours à l'initiative de cet échange. Ainsi, le module OAMS se comporte comme un client tandis que le module GAMS se comporte comme un serveur.

Le système de communication selon l'invention peut donc être analysé selon trois couches,
- une couche réseau contrôlée par le contrôleur de communication ;
- une couche données mise en oeuvre par les modules OAMS et GAMS ; et,
- une couche applicative basée sur les API des modules OAMS et GAMS.

Chacune de ces trois couches est ici décrite plus en détail.

Comme mentionné précédemment la couche réseau est contrôlée par le contrôleur de communication qui est en charge d'établir les chemins de connexion nécessaires à la communication des deux modules OAMS et GAMS. Le contrôleur de communication comprend un moteur de routage utilisant des données avioniques issues, par exemple, d'une base de données pour contrôler des équipements réseaux. Le moteur de routage du contrôleur de communication peut être assimilé à un simple automate à états.

La transition entre un état « attente » et un état « routage » est avantageusement déclanchée par un ou plusieurs événements avioniques dérivant de la modification d'un ou de plusieurs paramètres pouvant représenter l'état d'un canal de communication ou une simple information de vol. L'état d'un canal de communication comprend par exemple sa disponibilité. Une information de vol est par exemple la position géographique de l'avion par rapport au sol, éventuellement comparée à un seuil pour déterminer une position « sol » et une position « en l'air ».

Lorsque le contrôleur de communication est dans l'état « routage », il détermine la configuration des équipements réseaux afin de prendre en compte les changements éventuels. Par exemple si le canal de communication WiFi est disponible, que la phase de vol l'autorise (si par exemple l'avion au sol) et que la politique de la compagnie aérienne le demande (route de priorité définie), le contrôleur de communication configure les équipements réseaux pour établir un chemin de connexion WiFi. Le contrôleur indique alors l'établissement de ce chemin de connexion dans la base de donnée avionique. La configuration des équipements réseaux peut être réalisée par la création et la transmission de scripts de configuration, les scripts étant créés par le contrôleur de communication et transmis aux équipements réseaux.

Lorsque l'ensemble des équipements réseaux est configuré et qu'il n'y pas de modification des paramètres réseaux et des paramètre de vol, le contrôleur de communication se met dans un état d'« attente » dans lequel il surveille les modifications des paramètres réseaux et des paramètre de vol.

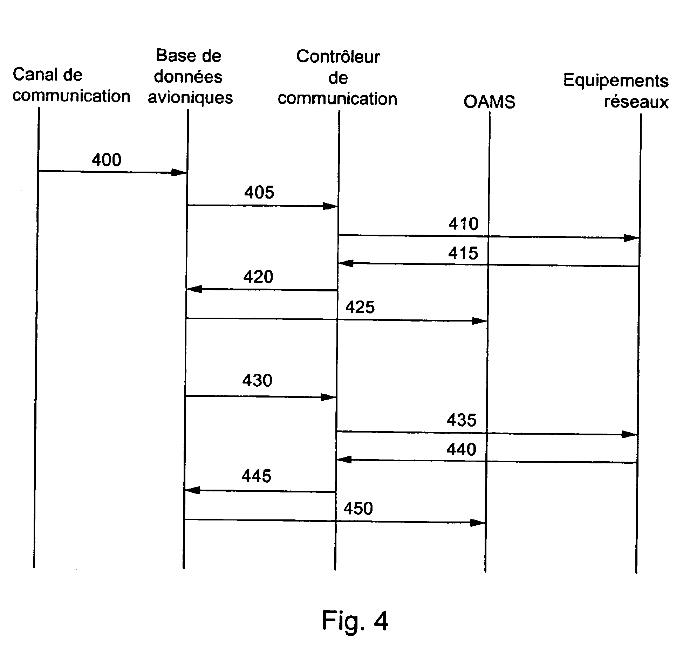

La figure 4 représente un exemple de gestion des canaux de communication par le contrôleur de communication lorsqu'un canal de communication devient disponible et lorsqu'un paramètre de vol est modifié.

Lorsqu'un canal de communication est disponible, c'est-à-dire que l'interface de communication a détecté la possibilité d'émettre et de recevoir des données à partir de ce canal de communication, l'interface de communication transmet cette information à la base de données avioniques (étape 400). La détection de la possibilité d'émettre et de recevoir des données à partir d'un canal de communication est liée à la nature du canal de détection. Cette détection est réalisée selon le protocole standard utilisé pour le canal de communication en question. Lorsque le contrôleur de communication identifie la modification du paramètre réseau dans la base de données avionique (étape 405), la modification du paramètre réseau étant liée à la disponibilité du canal de communication, le contrôleur de communication détermine une nouvelle configuration pour les équipements réseaux selon les paramètres de vol, les canaux de communication disponibles et la politique de la compagnie aérienne et transmet cette nouvelle configuration aux équipements réseaux (étape 410). Les équipements réseaux modifient leur configuration et transmettent, de préférence, un accusé réception au contrôleur de communication (étape 415). Le contrôleur de communication transmet alors l'information selon laquelle le nouveau canal de communication est disponible à la base de données avioniques (étape 420). Lorsque le module OAMS détecte la modification de la base de données avioniques selon laquelle un nouveau canal de communication est disponible (étape 425), le module OAMS peut utiliser ce canal de communication.

Dans un mode de réalisation préféré, les modifications de la base de données avioniques sont détectées par le contrôleur de communication et par le module OAMS. Cependant, il doit être considéré ici qu'un module de surveillance peut être associé à la base de données avioniques pour informer le contrôleur de communication et/ou le module OAMS de tout changement.

Lorsque la modification d'un paramètre de vol, par exemple la position de l'avion, est identifiée par le contrôleur de communication (étape 430), le contrôleur de communication détermine une nouvelle configuration pour les équipements réseaux selon les paramètres de vol, les canaux de communication disponibles et la politique de la compagnie aérienne et transmet cette nouvelle configuration aux équipements réseaux (étape 435). Les équipements réseaux modifient leur configuration et transmettent, de préférence, un accusé réception au contrôleur de communication (étape 440). Le contrôleur de communication transmet alors l'information selon laquelle un nouveau canal de communication est disponible, selon laquelle un canal de communication n'est plus disponible ou selon laquelle les paramètre d'un canal de communication ont été modifiés à la base de données avioniques (étape 445). Lorsque le module OAMS détecte cette modification dans la base de données avioniques (étape 450), le module OAMS modifie ses paramètres pour tenir compte de ces modifications.

La couche donnée utilisée pour l'échange des données est mise en oeuvre par les modules OAMS et GAMS en charge de contrôler l'échange de données entre un avion et le sol. La couche donnée, située entre les couches réseau et application, utilise les chemins de connexion configurés par le contrôleur de communication. Le contrôle du transfert de données est donc indépendant du contrôle des canaux de communication.

Le module OAMS et le module GAMS sont par exemple implémentés au sein de serveurs applicatifs J2EE *(Java 2 Enterprise Edition)* sous forme de *servlet* Java (Java est une marque). Le module OAMS peut être du type à architecture client serveur classique où l'API *(Application Programming Interface)* du module OAMS est le client et le module OAMS est le serveur. De même, le module GAMS est peut être constitué d'un API du module GAMS, du module GAMS et d'une base de donnée. Les applications, par exemple codées en Java et en C++, peuvent s'interfacer avec ces deux serveurs au moyen de deux API, une pour le module OAMS et une pour le module GAMS. Celles-ci peuvent communiquer avec les serveurs au sein d'un flux http *(HyperText Transfer Protocol).*

Les échanges de messages de type BtoB *(Business-to-Business)* entre le module OAMS et le module GAMS peuvent être encapsulés dans un flux HTTPS, à initiative de l'avion, utilisant de préférence des certificats X509 pour l'authentification afin de répondre aux exigences de sécurité des communications entre avions et sol.

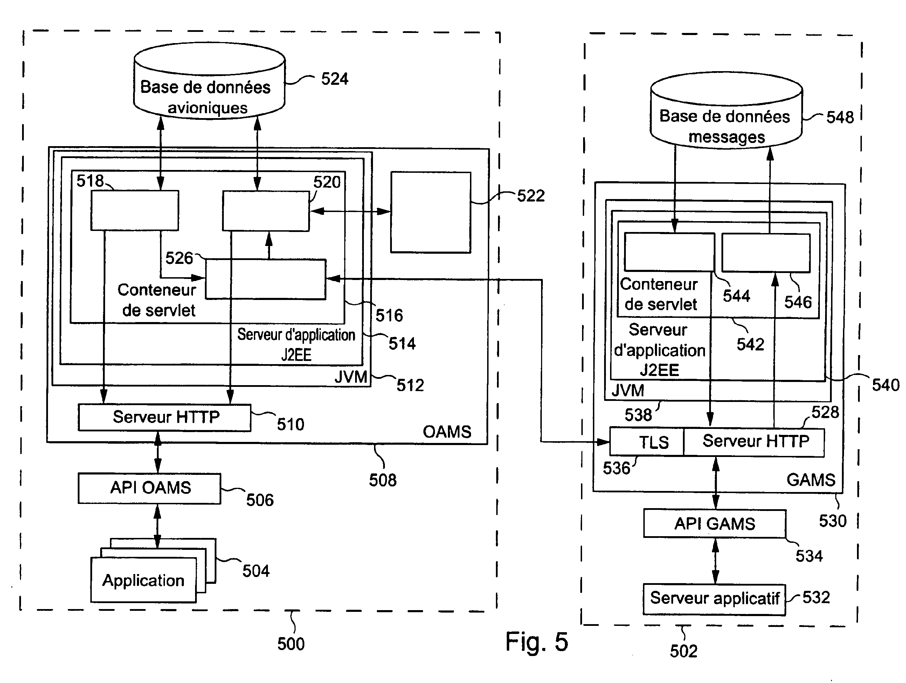

La figure 5 illustre un tel exemple d'implémentation pour l'échange de messages entre le système d'information de l'avion 500 et le système d'information au sol 502. Les applications 504 du système d'information de l'avion 500 utilisent des API OAMS 506 pour transmettre des requêtes au module OAMS 508 et plus précisément à un serveur frontal http 510 du module OAMS 508. Les résultats des requêtes sont transmis aux applications 504 par le serveur http via les API OAMS 506.

Les requêtes des applications 504 reçues par le serveur http 510 sont transmises au serveur d'application, ici le serveur d'application 514 J2EE *(Java 2 Enterprise Edition)* de la machine virtuel Java 512 (JVM, *Java Virtual Machine).* Les résultats des requêtes sont transmis au serveur http 510 par le serveur d'application 514.

Le serveur d'application 514 comprend avantageusement un conteneur de *servlet* Java 516 pour traiter les requêtes des applications grâce à deux services dédiés 518 et 520, de type « *send »* et *«fetch*», respectivement. Le service « *send* » assure la transmission des messages vers le module GAMS tandis que le service « *fefch»* a la charge de récupérer les messages en attente sur le même serveur dans la mémoire 522.

Pour assurer ces tâches, ces deux services sont interfacés avec la base de donnée avionique 524 pour vérifier la disponibilité des canaux communication, avec le serveur http 510 pour communiquer avec les applications et avec l'implémentation d'un client https 526 pour communiquer de façon sécurisée avec le système d'information du sol. Il convient de remarquer que le module OAMS comprend en outre une interface avec un gestionnaire de fichier du serveur pour le stockage dans la mémoire 522 des messages en attente d'être envoyés au système d'information du sol ou récupéré par les applications 504. Dans la mémoire 522, les messages sont de préférence organisés dans des boîtes de messages dédiées par application.

De façon similaire, un serveur frontal http 528 du module GAMS 530 reçoit les requêtes des applications 532 du système d'information au sol 502 à travers les API GAMS 534. Le serveur frontal http 528 du module GAMS 530 reçoit également les requêtes des applications 504 des modules OAMS 508 des systèmes d'information d'avion 500 à travers des tunnels 536 de types TLS *(Transport Layer Security).* Les réponses aux requêtes des applications sont transmises par le serveur http 528 au serveur applicatif 532 via les API GAMS 534 et aux applications 504 via les tunnels 536.

Les requêtes des applications sont transmises par le serveur http 528 aux services du conteneur de *servlet* 542 du serveur d'application 540 J2EE de la machine virtuel Java 538. Les résultats des requêtes sont transmis au serveur http 528 par le serveur d'application 540.

Comme le module OAMS, le module GAMS comprend avantageusement deux services dédiés 544 et 546, appelés respectivement *« message provider »* et *« receive* ». Le service « *message provider »* 544 met à disposition les messages aux modules OAMS concernés tandis que le service *« receive »* 546 reçoit les messages du serveur http 528 et les répartie dans des boîtes de messages d'une mémoire ou d'une base de données 548. Ainsi, les deux services 544 et 546 s'interfacent avec la base de données 548 pour stocker les messages dans des boîtes de messages dédiées qui sont de préférence organisées de la même façon que sur les modules OAMS, c'est-à-dire dédiées par application à l'exception près que le module GAMS doit gérer plusieurs avions et donc regrouper les boîtes de messages par avion et par priorité.

Les API OAMS 506 et GAMS 534 servent à masquer les problématiques de communication aux applications des systèmes d'information des avions et de sol. Ces API forment ainsi une façade permettant d'utiliser toutes les fonctionnalités du système de communication OWAG-CS. Ces API, pouvant être codées en Java et en C++ afin de s'intégrer aux applications déjà existantes, sont basées sur la couche données formée par les modules OAMS et GAMS et communiquent nativement en http avec les serveurs frontaux http des modules OAMS et GAMS.

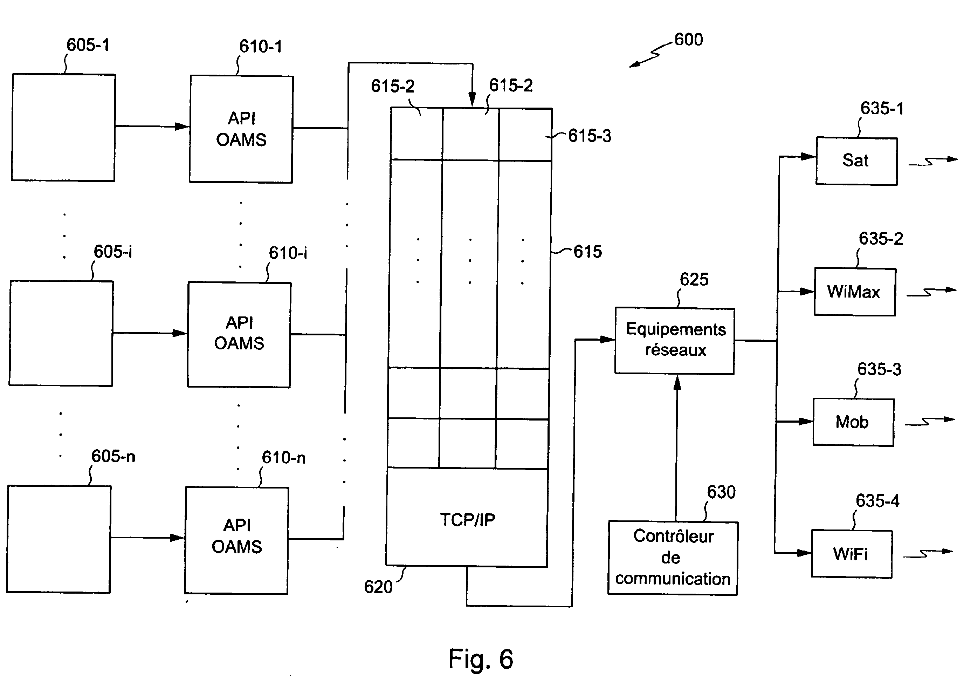

La couche message offre aux applications des systèmes d'information des avions et du système d'information au sol un mécanisme avancé de gestion des priorités pour l'échange de messages entre les avions et le sol. La figure 6 illustre ce mécanisme 600 de gestion des priorités pour les messages transmis par les avions.

Les applications du système d'information de l'avion, référencée 605-1 à 605-n, peuvent transmettre des messages au module OAMS via des API OAMS référencées 610-1 à 610-n, respectivement. Le module OAMS comprend de préférence une mémoire 615 constituée d'éléments de mémoire de type FIFO *(First In, first Out)* 615-1, 615-2 et 615-3, adaptée à recevoir les messages émis par les applications 605-1 à 605-n. Les messages stockés dans la mémoire 615 sont transmis à une pile TCP/IP *(Transmission Control Protocol*/ *Internet Protocol)* 620 qui décompose le message en paquets IP dans lesquels l'adresse IP est déterminée selon la priorité du message. Une information de qualité de service liée au niveau de priorité, de type DSCP *(Differentiated Services Code Point),* est ensuite ajoutée à ces paquets IP qui sont alors transmis à l'interface de communication via les équipements réseaux 625 contrôlés par le contrôleur de communication 630. L'interface de communication est constituée de plusieurs éléments, notamment d'un élément d'interface de communication par satellite 635-1, d'un élément d'interface de communication WiMax 635-2, d'un élément d'interface de communication 635-3 conforme à au moins certaines technologies de téléphonie mobile telles que GSM, GPRS et UMTS et d'un élément d'interface de communication WiFi 635-4.

Chaque élément de mémoire 615-1, 615-2 et 615-3 correspond à un niveau de priorité. Ici, trois niveaux de priorité sont utilisés : priorité faible, moyenne et élevée. Lorsqu'une application 605-i envoie un message, elle associe un niveau de priorité à celui-ci. A la réception d'un message, le module OAMS analyse le niveau de priorité et mémorise le message dans l'élément de mémoire de type FIFO correspondant au niveau de priorité du message. Par exemple, si un message de priorité faible est reçu, il est mémorisé dans l'élément de mémoire 615-3, si un message de priorité moyenne est reçu, il est mémorisé dans l'élément de mémoire 615-2 et si un message de priorité élevée est reçu, il est mémorisé dans l'élément de mémoire 615-1.

Le niveau de priorité est utilisé par le module OAMS pour traiter les messages reçus et pour déterminer leur mode de transfert vers le module GAMS.

Les adresses IP utilisées par le module IP pour transformer un message en paquets IP sont des adresses prédéterminées. Il existe avantageusement une adresse IP par niveau de priorité. De même, il existe une valeur DSCP par niveau de priorité. Ce lien entre le niveau de priorité d'un message et l'adresse IP de destination au sol permet d'avoir une corrélation simple entre une décision prise au niveau applicatif, c'est-à-dire un choix de niveau de priorité, et les décisions de routage de paquets gérées par les équipements réseaux à plus bas niveau, c'est-à-dire au niveau IP.

De même et pour compléter le mécanisme précédent, le champ DSCP des paquets IP est complété par une valeur prédéfinie selon la priorité du message pour permettre une meilleure prise en charge des paquets par les infrastructures réseaux. Par exemple un paquet IP avec un champ DSCP élevé devra être traité en priorité par les routeurs traversés. Il convient de rappeler ici qu'une valeur DSCP correspond à un champ qui se trouve dans un paquet IP et qui permet l'attribution de différents niveaux de service au trafic réseau.

Le type de transmission entre l'avion et le sol est géré par le contrôleur de communication qui détermine les chemins de connexions vers chacune des trois adresses IP possibles du GAMS, suivant la disponibilité des différents canaux de communication et selon la politique de la compagnie aérienne. Le tableau suivant, accessible par le contrôleur de communication, illustre un exemple possible de politique d'une compagnie aérienne,

| Priorité | DSCP | Adresse IP | Canal préféré | Canal alternatif 1 | Canal alternatif 2 |
|---|---|---|---|---|---|
| élevée | 48 | IP1 | WiFi | GSM | Satellite |
| moyenne | 32 | IP2 | WiFi | WiMax | GSM |
| faible | 16 | IP3 | WiFi | - | - |

Dans cet exemple, la compagnie aérienne privilégie les moyens de communication peu onéreux et présentant de bonnes performances mais avec des zones de couvertures restreintes. Si une connexion de type WiFi ne peut pas être établie, une connexion de type téléphonie mobile est autorisée, si elle est accessible, pour les priorités élevée et moyenne. Si ces moyens ne sont disponibles, une connexion par satellite offrant une zone de couverture étendue mais présentant des coûts d'utilisation élevés et des performances très faibles est autorisée uniquement pour les priorités élevées. Lorsque les types de canaux de communication ne sont pas autorisés pour certains niveaux de priorité, les messages correspondants doivent attendre pour être envoyé qu'un canal de communication autorisé soit disponible.

Les messages sont ici des messages ayant un format quelconque auxquels sont associés un niveau de priorité, une adresse source et une adresse de destination. Lorsqu'un message à transmettre et les informations associées sont décomposés en paquets IP, les informations associées ne sont plus directement accessibles, elles ne le sont qu'après la reconstruction du message qui est réalisé selon un mécanisme standard, correspondant au mécanisme de décomposition en paquets IP. Alternativement, les messages peuvent comprendre eux-mêmes les informations complémentaires telles que le niveau de priorité et les adresses source et de destination.

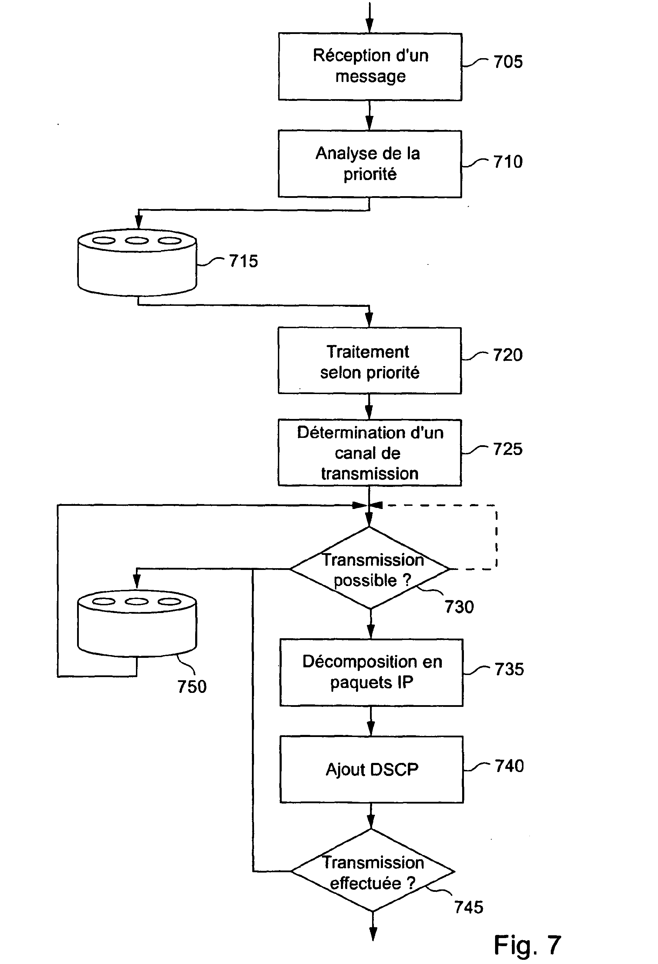

La figure 7 représente un exemple d'algorithme de traitement des messages reçus d'une application du système d'information d'un avion par le module OAMS et devant être transmis au module GAMS d'un système d'information au sol. Lorsqu'un message est reçu (étape 705), la priorité de ce message est déterminée (étape 710). Le message est alors mémorisé dans une mémoire 715 de type FIFO, selon son niveau de priorité. Les messages stockés dans la mémoire 715 sont traités selon leur niveau de priorité (étape 720). Le module OAMS consulte alors la base de données avioniques pour déterminer si un canal de communication est disponible (étape 725). Si un canal de communication est disponible, un test est effectué pour déterminé si le canal de transmission peut être utilisé (étape 730). Si le canal de transmission peut être utilisé, les messages sont décomposés en paquets IP dans lesquels l'adresse IP est fonction du niveau de priorité (étape 735) et une valeur DSCP est ajoutée dans chaque paquet IP (étape 740). Les messages sont ensuite transmis sous forme de paquets IP et un test est effectué pour déterminer si les messages ont été transmis (étape 745). Si le canal de communication désigné ne peut pas être utilisé, le système détermine si un autre canal de communication peut être utilisé comme indiqué par la flèche en pointillé. Si aucun canal de communication ne peut être utilisé pour transmettre les messages, ces messages sont mémorisés temporairement dans une mémoire 750, de préférence selon leur priorité, pour être envoyés ultérieurement lorsque le canal de communication désigné sera disponible. La mémoire 750 est ici similaire à la mémoire 715. De même, si la transmission de tous les messages ou de certains messages n'a pas été effectuée correctement, ces messages sont mémorisés temporairement dans la mémoire 750, de préférence selon leur priorité, pour être envoyés ultérieurement lorsque le canal de communication désigné sera disponible. La « durée de vie » des messages dans la mémoire 750 est de préférence limitée. Par exemple, un message mémorisé dans la mémoire 750 est automatiquement effacé après une période de trente minutes. La « durée de vie » des messages peut être associé au niveau de priorité du message ou à sa nature. Certains messages peuvent également être effacés de la mémoire 750 sur requête de l'application à l'origine du message, par exemple si un pilote veut annuler l'envoi d'un rapport devenu obsolète depuis son émission.

La mémoire 750 permet ainsi de mémoriser les messages devant être transmis par un canal de communication non accessible et aussi de gérer un mécanisme de reprise sur erreur qui permet de reprendre, après une rupture temporaire du canal de communication utilisé, un transfert de message entre les modules OAMS et GAMS au point exact où le transfert s'est interrompu. Après une perte de connectivité le module OAMS signale au module GAMS qu'il reprend le transfert d'un message.

Le module OAMS peut comprendre des fonctionnalités de surveillance et le module GAMS peut comprendre des fonctionnalités de surveillance et de statistiques. La surveillance permet à une application d'interroger son serveur de communication sur l'état de ses envois de messages, par exemple 20% sur le premier message et 50% sur le second, et sur l'heure et la date de la dernière connexion. L'information peut être obtenue par requêtes de l'application. Les fonctionnalités de statistiques du module GAMS permettent à l'administrateur du système d'information de la compagnie aérienne d'avoir un état général du système, par exemple le nombre d'envois de messages réussis, le nombre d'échecs ou le volume échangé.

Bien que la description de la transmission d'un message ait été décrite à partir d'un module OAMS, la transmission d'un message à partir d'un module GAMS est similaire.

Il convient de noter que les transmissions de messages peuvent être du type *unicast* (d'un système vers un autre) ou *multicast* (d'un système vers plusieurs autres), c'est-à-dire d'une application du système d'information d'un avion vers une application du système d'information au sol et vice-versa ou d'une application du système d'information d'un avion vers plusieurs applications du système d'information au sol ou d'une application du système d'information au sol vers plusieurs applications du système d'information d'un avion ou de plusieurs avions.

Pour des raisons de sécurité, il est préférable d'interdire d'envoyer des messages du sol vers le sol ou d'un avion vers un avion.

Selon un second mode de réalisation de l'invention, les interfaces entre les applications et les deux serveurs des modules OAMS et GAMS sont différentes. Celles-ci ne sont pas développées sur des API propriétaires mais sont construites en tant que « *Web services* ». L'avantage d'une telle implémentation est de pouvoir intégrer directement les deux serveurs communicants au sein du système d'information de l'avion et/ou du système d'information au sol grâce à une solution SOA *(Service Oriented Architecture)* complète.

La modification consiste principalement à faire supporter nativement le protocole SOAP *(Simple Object Access Protocol)* par les interfaces OAMS et GAMS et de diffuser au sein de l'infrastructure SOA la spécification de ces mêmes interfaces selon le format WSDL *(Web Service Description Language).*

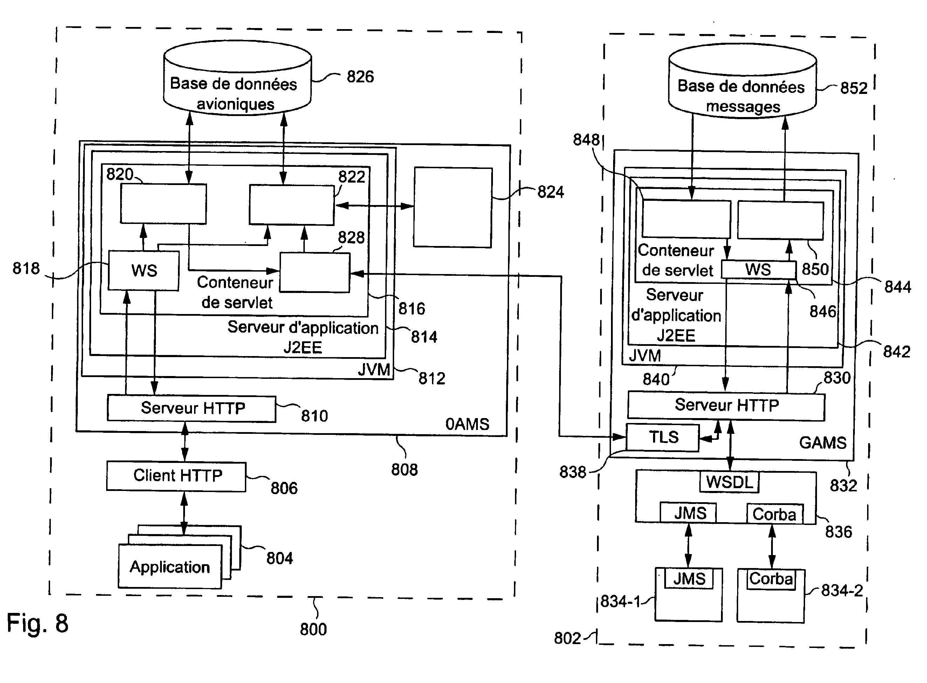

Ainsi, dans ce second mode de réalisation, la partie SSL *(Secure Socket Layer)* / TLS du module GAMS est remplacée par un équipement gérant nativement ce type de session, comme illustré sur la figure 8. De telles modifications sont motivées par le fait que le système peut ainsi devenir interopérable avec les solutions EAI *(Enterprise Application Integration)* du marché et que les performances du système s'en trouvent notablement améliorées.

La figure 8 illustre le second mode de réalisation pour l'échange de messages entre le système d'information de l'avion 800 et le système d'information au sol 802. Les applications 804 du système d'information de l'avion 800 utilisent un client http 806 pour transmettre des requêtes au module OAMS 808 et plus précisément à un serveur frontal http 810 du module OAMS 808. Les résultats des requêtes sont transmis aux applications 804 par le serveur http 810 via le client http 806.

Les requêtes des applications 804 reçues par le serveur http 810 sont transmises au serveur d'application, ici le serveur d'application 814 J2EE de la machine virtuel Java 812 (JVM). Les résultats des requêtes sont transmis au serveur http 810 par le serveur d'application 814.

Le serveur d'application 814 comprend avantageusement un conteneur de *servlet* Java 816 pour traiter les requêtes des applications grâce à un service web 818 (WS) et à deux services dédiés 820 et 822, de type « *send* » et « fetch », respectivement. Le service « *send »* assure la transmission des messages vers le module GAMS tandis que le service « *fetch »* a la charge de récupérer les messages en attente sur le même serveur dans la mémoire 824.

Pour assurer ces tâches, ces deux services sont interfacés avec la base de donnée avionique 826 pour vérifier la disponibilité des canaux communication, avec le serveur http 810 pour communiquer avec les applications et avec l'implémentation d'un client https 828 pour communiquer de façon sécurisée avec le système d'information du sol. Il convient de remarquer que le module OAMS comprend en outre une interface avec un gestionnaire de fichier du serveur pour le stockage dans la mémoire 824 des messages en attente d'être envoyés au système d'information du sol ou récupéré par les applications 804. Dans la mémoire 824, les messages sont de préférence organisés dans des boîtes de messages dédiées par application.

De façon similaire, un serveur frontal http 830 du module GAMS 832 reçoit les requêtes des applications 834-1 et 834-2 (le nombre d'applications n'est pas limité) du système d'information au sol 802 à travers l'interface EAI 836. L'interface EAI 836 comprend ici des interfaces JMS *(Java Message Service)* et Corba adaptées à échanger des données avec les clients JMS et Corba des applications 834-1 et 834-2. Le serveur frontal http 830 du module GAMS 832 reçoit également les requêtes des applications 804 des modules OAMS 808 des systèmes d'information d'avion 800 à travers un module externalisé TLS 838. Les réponses aux requêtes des applications sont transmises par le serveur http 830 aux serveurs applicatifs 834-1 et 834-2 via l'interface EAI 836 et aux applications 804 via le module externalisé TLS 838.

Les requêtes des applications sont transmises par le serveur http 830 aux services du conteneur de *servlet* 844 du serveur d'application 842 J2EE de la machine virtuel Java 840. Les résultats des requêtes sont transmis au serveur http 830 par le serveur d'application 842.

Comme le module OAMS, le module GAMS comprend avantageusement un service web 846 (WS) et deux services dédiés 848 et 850, appelés respectivement *« message provider »* et *« receive ».* Le service « *message provider »* 848 met à disposition les messages aux modules OAMS concernés tandis que le service « *receive »* 850 reçoit les messages du serveur http 830 et les répartie dans des boîtes de messages d'une mémoire ou d'une base de données 852. Ainsi, les deux services 848 et 850 s'interfacent avec la base de données 852 pour stocker les messages dans des boîtes de messages dédiées qui sont de préférence organisées de la même façon que sur les modules OAMS, c'est-à-dire dédiées par application à l'exception près que le module GAMS doit gérer plusieurs avions et donc regrouper les boîtes de messages par avion et par priorité.

L'utilisation d'interfaces de type service web permet de ne pas utiliser des API propriétaires nécessaires aux applications pour communiquer avec le système de communication. Il est néanmoins possible de conserver un connecteur dédié pour l'interface avec l'EAI.

Les services web 818 et 846 ajoutés au sein des conteneurs de servlet du module OAMS et du module GAMS ont pour fonction de récupérer les requêtes SOAP émises par les applications clientes au travers d'une interface décrite en WSDL et de les transmettre aux autres services.

Naturellement, pour satisfaire des besoins spécifiques, une personne compétente dans le domaine de l'invention pourra appliquer des modifications dans la description précédente.

## Revendications

1. Procédé de communication de données dans un aéronef (105) pour échanger des données entre au moins une application dudit aéronef et au moins une application au sol, ledit aéronef comprenant des moyens (115) adaptés à établir au moins un chemin de connexion entre ledit aéronef et au moins une entité au sol (120) selon une pluralité de canaux de communication, ladite pluralité de canaux de communication comportant au moins un canal de communication de type ouvert et au moins un canal de communication d'un type différent dudit type ouvert, ce procédé comportant :
- un contrôle desdits canaux de communication ledit contrôle desdits canaux de communication comportant :
○ une détection d'un événement (405, 430) ;
○ une détermination d'une configuration de communication (410, 435) selon ledit événement pour permettre audit aéronef de recevoir ou de transmettre des données à ladite au moins une entité au sol par l'intermédiaire d'au moins un desdits canaux de communication ; et,
○ une adaptation desdits moyens adaptés à établir au moins un chemin de connexion pour établir au moins un chemin de connexion entre ledit aéronef et ladite au moins une entité au sol selon ladite configuration de communication,
- un contrôle du transfert desdites données entre lesdites applications ladite étape de contrôle desdits canaux de communication étant indépendante de ladite étape de contrôle du transfert desdites données entre lesdites applications, et
- une étape de transmission d'au moins une donnée, ladite étape de transmission comprenant les étapes suivantes,
o détermination (710) d'un niveau de priorité de ladite au moins une donnée ;
o détermination (725) du type de canal de communication dudit au moins un chemin de connexion ; et,
o si ledit type de canal de communication déterminé est compatible avec ledit niveau de priorité (730), transmettre ladite au moins une donnée à ladite au moins une entité au sol.

2. Procédé selon la revendication 1 **caractérisé en ce qu'**une adresse de destination de ladite au moins une entité au sol est associée à chaque niveau de priorité et **en ce que** ladite au moins une donnée est transmise à l'adresse de destination associée au niveau de priorité de ladite au moins une donnée.

3. Procédé selon la revendication 1 ou la revendication 2 **caractérisé en ce que** la détermination de la compatibilité dudit canal de communication déterminé avec ledit niveau de priorité est fonction d'au moins un paramètre de configuration.

4. Procédé selon l'une quelconque des revendications précédentes **caractérisé en ce qu'**il comprend en outre une étape d'accès à au moins une donnée à transmettre, le format de ladite au moins une donnée accédée étant indépendant du canal de communication dudit au moins un chemin de connexion.

5. Programme d'ordinateur comprenant des instructions adaptées à la mise en oeuvre de chacune des étapes du procédé selon l'une quelconque des revendications précédentes.

6. Dispositif de communication de données dans un aéronef (105) pour échanger des données entre au moins une application dudit aéronef et au moins une application au sol, ledit aéronef comprenant des moyens (115) adaptés à établir au moins un chemin de connexion entre ledit aéronef et au moins une entité au sol (120) selon une pluralité de canaux de communication, ladite pluralité de canaux de communication comportant au moins un canal de communication de type ouvert et au moins un canal de communication d'un type différents dudit type ouvert, ledit au moins un chemin de connexion étant établi indépendamment du contrôle du transfert desdites données et le dispositif comportant les moyens suivants :
- moyens (350) pour détecter un événement ;
- moyens (325) pour déterminer une configuration de communication selon ledit événement permettant audit aéronef de recevoir ou de transmettre des données à ladite au moins une entité au sol par l'intermédiaire d'au moins un desdits canaux de communication ;
- moyens (360) pour adapter lesdits moyens adaptés à établir au moins un chemin de connexion afin d'établir au moins un chemin de connexion entre ledit aéronef et ladite au moins une entité au sol selon ladite configuration de communication ; et
- moyens de transmission d'au moins une donnée, lesdits moyens de transmission comprenant les moyens suivants,
○ moyens pour déterminer un niveau de priorité de ladite au moins une donnée ;
○ moyens pour déterminer le type de canal de communication dudit au moins un chemin de connexion ;
○ moyens pour déterminer si ledit type de canal de communication déterminé est compatible avec ledit niveau de priorité et pour transmettre ladite au moins une donnée à ladite au moins une entité au sol.

7. Dispositif selon la revendication 6 **caractérisé en ce qu'**il comprend en outre des moyens de mémorisation des données à transmettre, lesdites données à transmettre étant mémorisées selon les niveaux de priorité associés auxdites données à transmettre, une adresse de destination de ladite au moins une entité au sol étant associée à chaque niveau de priorité.

8. Dispositif selon l'une quelconque des revendications 6 et 7 **caractérisé en ce que** lesdits moyens de détection d'un événement sont adaptés à détecter une modification d'état desdits canaux de communication ou la position dudit aéronef.

## Claims

1. A method for communication of data in an aircraft (105) for exchanging data between at least one application of the said aircraft and at least one application on the ground, the said aircraft comprising means (115) adapted for establishing at least one connection path between the said aircraft and at least one entity (120) on the ground according to a plurality of communication channels, said plurality of communication channels comprising at least one communication channel of open type and at least one communication channel of a type different from said open type, the method comprising:
- controlling said communication channels said controlling of said communication channels comprising:
o detecting an event (405, 430);
o determining a communication configuration (410, 435) according to the said event in order to enable the said aircraft to receive or transmit data to the said at least one entity on the ground via least one of the said communication channels; and,
o adapting the said means adapted for establishing at least one connection path in order to establish at least one connection path between the said aircraft and the said at least one entity on the ground according to the said communication configuration,
- controlling the transfer of said data between said applications, said step of controlling said communication channels being independent from said step of collecting the transfer of said data between said applications, and
- a step of transmitting at least one item of data, the said transmitting step comprising the following steps,
o determining (710) a priority level of the said at least one item of data;
o determining (725) the type of communication channel of the said at least one connection path; and
o if the said type of determined communication channel is compatible with the said priority level (730), transmitting the said at least one item of data to the said at least one entity on the ground.

2. A method according to claim 1, **characterized in that** a destination address of the said at least one entity on the ground is associated with each priority level and **in that** the said at least one item of data is transmitted to the destination address associated with the priority level of the said at least one item of data.

3. A method according to claim 1 or claim 2, **characterized in that** the determination of the compatibility of the said determined communication channel with the said priority level is a function of at least one configuration parameter.

4. A method according to any one of the preceding claims, **characterized in that** it further comprises a step of accessing at least one item of data to be transmitted, the format of the said at least one accessed item of data being independent of the communication channel of the said at least one connection path.

5. A computer program comprising instructions adapted for implementing each of the steps of the method according to any one of the preceding claims.

6. A device for communication of data in an aircraft (105) for exchanging data between at least one application of the said aircraft and at least one application on the ground, the said aircraft comprising means (115) adapted for establishing at least one connection path between the said aircraft and at least one entity (120) on the ground according to a plurality of communication channels, said plurality of communication channels comprising at least one communication channel of open type and at least one communication channel of a type different from said open type, said at least one connection path being established independently from the control of the transfer of said data and the device comprising the following means,
- means (350) for detecting an event;
- means (325) for determining a communication configuration according to the said event enabling said aircraft to receive or transmit data to the said at least one entity on the ground via at least one of the said communication channels;
- means (360) for adapting the said means adapted for establishing at least one connection path in order to establish at least one connection path between the said aircraft and the said at least one entity on the ground according to the said communication configuration; and
- means for transmitting at least one item of data, the said transmitting step comprising the following means,
o means for determining a priority level of the said at least one item of data;
o means for determining the type of communication channel of the said at least one connection path; and
o means for determining if the said type of determined communication channel is compatible with the said priority level and for transmitting the said at least one item of data to the said at least one entity on the ground.

7. A device according to claim 6, **characterized in that** it further comprises means for storing the data to be transmitted in memory, the said data to be transmitted being stored in memory according to the priority levels associated with the said data to be transmitted, a destination address of the said at least one entity on the ground being associated with each priority level.

8. A device according to any one of claims 6 and 7, **characterized in that** the said means for detecting an event are adapted for detecting a modification of the state of the said communication channels or of the position of the said aircraft.

## Patentansprüche

1. Verfahren zur Datenübermittlung in einem Flugzeug (105) für den Austausch von Daten zwischen wenigstens einer Anwendung des Flugzeugs und wenigstens einer Anwendung am Boden, wobei das Flugzeug Mittel (115) umfasst, die dafür ausgelegt sind, wenigstens einen Verbindungsweg zwischen dem Flugzeug und wenigstens einer Einheit am Boden (120) entlang einer Vielzahl von Kommunikationskanälen einzurichten, wobei die Vielzahl von Kommunikationskanälen wenigstens einen Kommunikationskanal vom offenen Typ und wenigstens einen Kommunikationskanal von einem anderen Typ als dem offenen Typ umfasst, wobei dieses Verfahren umfasst:
- eine Kontrolle der Kommunikationskanäle, wobei die Kontrolle der Kommunikationskanäle umfasst:
- ein Erfassen eines Ereignisses (405, 430),
- ein Festlegen einer Kommunikationskonfiguration (410, 435) entsprechend dem Ereignis, um dem Flugzeug zu ermöglichen, über wenigstens einen der Kommunikationskanäle Daten zu empfangen oder an die wenigstens eine Einheit am Boden zu übertragen, und
- ein Anpassen der Mittel, die dafür ausgelegt sind, wenigstens einen Verbindungsweg einzurichten, um wenigstens einen Verbindungsweg zwischen dem Flugzeug und der wenigstens einen Einheit am Boden entsprechend der Kommunikationskonfiguration einzurichten,
- eine Kontrolle der Übertragung der Daten zwischen den Anwendungen, wobei der Schritt zur Kontrolle der Kommunikationskanäle von dem Schritt zur Kontrolle des Transfers der Daten zwischen den Anwendungen unabhängig ist, sowie
- einen Schritt zur Übertragung von wenigstens einem Datenmaterial, wobei der Übertragungsschritt die folgenden Schritte umfasst:
- Bestimmen (710) einer Prioritätsebene des wenigstens einen Datenmaterials,
- Bestimmen (725) des Kommunikationskanaltyps des wenigstens einen Verbindungsweges und,
- falls der bestimmte Kommunikationskanaltyp mit der Prioritätsebene kompatibel ist (730), Übertragen des wenigstens einen Datenmaterials an die wenigstens eine Einheit am Boden.

2. Verfahren nach Anspruch 1, **dadurch gekennzeichnet, dass** jeder Prioritätsebene eine Zieladresse der wenigstens einen Einheit am Boden zugeordnet ist und dass das wenigstens eine Datenmaterial an die der Prioritätsebene des wenigstens einen Datenmaterials zugeordnete Zieladresse übertragen wird.

3. Verfahren nach Anspruch 1 oder Anspruch 2, **dadurch gekennzeichnet, dass** das Bestimmen der Kompatibilität des bestimmten Kommunikationskanals mit der Prioritätsebene von wenigstens einem Konfigurationsparameter abhängig ist.

4. Verfahren nach einem der vorhergehenden Ansprüche, **dadurch gekennzeichnet, dass** es ferner einen Schritt zum Zugreifen auf wenigstens ein zu übertragendes Datenmaterial umfasst, wobei das Format des wenigstens einen Datenmaterials, auf das zugegriffen wird, von dem Kommunikationskanal des wenigstens einen Verbindungsweges unabhängig ist.

5. Computerprogramm, das Befehle umfasst, die für die Durchführung eines jeden der Schritte des Verfahrens nach einem der vorhergehenden Ansprüche ausgelegt sind.

6. Datenübermittlungsvorrichtung in einem Flugzeug (105) für den Austausch von Daten zwischen wenigstens einer Anwendung des Flugzeugs und wenigstens einer Anwendung am Boden, wobei das Flugzeug Mittel (115) umfasst, die dafür ausgelegt sind, wenigstens einen Verbindungsweg zwischen dem Flugzeug und wenigstens einer Einheit am Boden (120) entlang einer Vielzahl von Kommunikationskanälen einzurichten, wobei die Vielzahl von Kommunikationskanälen wenigstens einen Kommunikationskanal vom offenen Typ und wenigstens einen Kommunikationskanal von einem anderen Typ als dem offenen Typ umfasst, wobei der wenigstens eine Verbindungsweg unabhängig von der Kontrolle der Übertragung der Daten eingerichtet wird und wobei die Vorrichtung die folgenden Mittel umfasst:
- Mittel (350) zum Erfassen eines Ereignisses,
- Mittel (325) zum Festlegen einer Kommunikationskonfiguration entsprechend dem Ereignis, wodurch dem Flugzeug ermöglicht wird, über wenigstens einen der Kommunikationskanäle Daten zu empfangen oder an die wenigstens eine Einheit am Boden zu übertragen,
- Mittel (360) zum Anpassen der Mittel, die dafür ausgelegt sind, wenigstens einen Verbindungsweg einzurichten, um wenigstens einen Verbindungsweg zwischen dem Flugzeug und der wenigstens einen Einheit am Boden entsprechend der Kommunikationskonfiguration einzurichten, und
- Mittel zur Übertragung wenigstens eines Datenmaterials, wobei die Übertragungsmittel die folgenden Mittel umfassen:
- Mittel zum Bestimmen einer Prioritätsebene des wenigstens einen Datenmaterials,
- Mittel zum Bestimmen des Kommunikationskanaltyps des wenigstens einen Verbindungsweges,
- Mittel zum Bestimmen, ob der bestimmte Kommunikationskanaltyp mit der Prioritätsebene kompatibel ist und zum Übertragen des wenigstens einen Datenmaterials an die wenigstens eine Einheit am Boden.

7. Vorrichtung nach Anspruch 6, **dadurch gekennzeichnet, dass** sie ferner Mittel zum Speichern der zu übertragenden Daten umfasst, wobei die zu übertragenden Daten entsprechend den den zu übertragenden Daten zugeordneten Prioritätsebenen gespeichert werden, wobei jeder Prioritätsebene eine Zieladresse der wenigstens einen Einheit am Boden zugeordnet ist.

8. Vorrichtung nach einem der Ansprüche 6 und 7, **dadurch gekennzeichnet, dass** die Mittel zum Erfassen eines Ereignisses dafür ausgelegt sind, eine Zustandsänderung der Kommunikationskanäle oder die Position des Flugzeugs zu erfassen.
